# EUROPÄISCHE PATENTANMELDUNG

(11) **EP 1 306 818 A2**
(43) Veröffentlichungstag der Anmeldung: **02.05.2003**
(21) Anmeldenummer: 02090353.0
(22) Anmeldetag: 15.10.2002
(51) Int. Cl.: G07D 9/00, B65G 19/02

(54) **Vorrichtung zum Fördern von vereinzelten Gegenständen**

(30) Priorität: 26.10.2001 DE 10152327
(71) Anmelder: F. Zimmermann GmbH & Co. KG, 10785 Berlin (DE)
(72) Erfinder: Zimmermann, Thomas, 10785 Berlin (DE)
(74) Vertreter: Lüke, Dierck-Wilm

(57) **Zusammenfassung**

Die Erfindung betrifft eine Vorrichtung zum Fördern von vereinzelten Gegenständen 1, insbesondere von scheibenförmigen Gegenständen, wie Münzen, mit einer Führungsbahn 2 und mit einem auf einem Transportarm 3 umlaufenden Lamellenriemen 4, wobei ein der Führungsbahn 2 zugewandtes Trum 5 des Lamellenriemens 4 über die gesamte Längserstreckung des Transportarmes 3 mit der Maßgabe geführt wird, daß zu der Führungsbahn 2 hinweisende Lamellenspitzen 6 des Lamellenriemens 4 einen Abstand A zu der Führungsbahn 2 aufweisen, welcher kleiner als die geringste Höhe eines Gegenstandes 1 über der Führungsbahn 2 ist. Die Erfindung ist dadurch gekennzeichnet, daß zumindest in einem Einlaufbereich 7 des Transportarmes 3 Mittel 8 zur Stützung der Lamellenspitzen 6 in Richtung orthogonal zur Transportrichtung eingerichtet sind.

## Beschreibung

Die Erfindung betrifft eine Vorrichtung zum Fördern von vereinzelten Gegenständen, insbesondere von scheibenförmigen Gegenständen, wie Münzen, mit einer Führungsbahn und mit einem auf einem Transportarm umlaufenden Lamellenriemen wobei ein der Führungsbahn zugewandtes Trum des Lamellenriemens über die gesamte Längserstreckung des Transportarms mit der Maßgabe geführt wird, daß zu der Führungsbahn hinweisende Lamellenspitzen des Lamellenriemens einen Abstand A zu der Führungsbahn aufweisen, welcher kleiner als die geringste Höhe eines Gegenstandes über der Führungsbahn ist. Bei einer solchen Vorrichtung werden die Gegenstände von dem der Führungsbahn zugewandten Trum des Lamellenriemens ergriffen und auf der Führungsbahn gefördert. Dies erfolgt insbesondere durch Angriff der Lamellenspitzen. Die Haftreibungs- und/oder Gleitreibungskräfte zwischen den Gegenständen und den Lamellenspitzen bzw. der unmittelbar hieran anschließenden Lamellenflanken sind größer als die Haftreibungs- und/oder Gleitreibungskräfte zwischen den Gegenständen und der Führungsbahn. Die im Rahmen der Erfindung förderbaren Gegenstände weisen meist eine scheibenförmige Gestaltung auf, wobei eine Hauptfläche der Scheibe auf der Führungsbahn gleitet und die gegenüberliegende Hauptfläche von dem Lamellenriemen ergriffen wird. Eine Führungsbahn kann beispielsweise als Sortierplatte ausgebildet sein.

Die Erfindung betrifft weiterhin die Verwendung einer solchen Vorrichtung sowie ein Verfahren zum Fördern von Münzen unter Einsatz einer solchen Vorrichtung.

Eine Vorrichtung des eingangs genannten Aufbaues ist aus der Literaturstelle DE 199 57 482 A1 bekannt. Die insofern bekannte Fördervorrichtung hat sich grundsätzlich gut bewährt. Ein Verbesserungsbedarf ergibt sich aus den folgend erläuterten Zusammenhängen. Typischerweise ist der Fördervorrichtung ein sogenannter Drehteller vorgeschaltet. Diesem Drehteller werden die Münzen durch Einschütten aufgegeben. Der Drehteller führt Münzen unter Vereinzelung durch geeignete Höhen- und Seitenführungsbleche der Fördervorrichtung zu, wobei ein Einlaufbereich des Transportarmes bis an den Drehteller heranreicht bzw. diesen teilweise überlappt. Die an den Drehteller heranreichende Führungsbahn weist typischerweise eine Anlaufkante oder Anlaufrolle auf, um welche eine von dem Drehteller auf die Führungsbahn übertretende Münze in einer Bogensegmentbahn geführt wird. Diese Technologie ist seit vielen Jahren gebräuchlich und dem Durchschnittsfachmann wohl bekannt, so daß eine vertiefte Erläuterung entbehrlich ist. Im Zusammenhang mit dem Einsatz eines Lamellenriemens ergibt sich eine besondere Problematik, welche bei Einsatz eines klassischen, beispielsweise als Keilriemen ausgebildeten Förderriemens nicht auftritt. Da die Lamellen jeweils relativ elastisch und aufgrund ihrer schlanken Ausbildung weniger formstabil sind, werden diese im Einlaufbereich nicht nur in Richtung entgegen der Förderrichtung gebogen. Vielmehr erfolgt durch die bogensegmentförmige Führung der Münze im Einlaufbereich eine Beaufschlagung mit einem Biege- bzw. Kippmoment in Richtung orthogonal zur Transportrichtung. Im Ergebnis kann ein Verkippen des Lamellenriemens erfolgen. Dies kann weiterhin dazu führen, daß Münzen jedenfalls im Eingangsbereich nicht zuverlässig an einer Lauf kante der Führungsbahn entlang geführt werden. Dies stört insbesondere, da im Einlaufbereich oder unmittelbar hieran anschließend typischerweise eine Sensorik zur Erfassung von Münzendurchmessern eingerichtet ist, welche die Laufkante als Bezugspunkt nutzt. Letztendlich kann es zu Fehlern in der Detektion der Wertigkeit einer geförderten Münze führen.

Der Erfindung liegt daher das technische Problem zugrunde, eine Vorrichtung zum Fördern von vereinzelten Gegenständen zu schaffen, welche ein zuverlässigere Führung der Gegenstände im Einlaufbereich gewährleistet.

Zur Lösung dieses technischen Problems lehrt die Erfindung, daß zumindest in einem Einlaufbereich des Transportarmes Mittel zur Stützung der Lamellenspitzen in Richtung orthogonal zur Transportrichtung eingerichtet sind. Die Mittel zur Stützung gewährleisten, daß die Lamellenspitzen gegen ein von den Gegenständen beim Umlaufen der Anlaufkante bzw. Anlaufrolle entstehendes Moment orthogonal zur Transportrichtung abgestützt werden. Die Erfindung kann grundsätzlich bei Lamellenriemen verschiedenster Ausführungen eingesetzt werden. Ein Lamellenriemen ist grundsätzlich ein Transportriemen, welcher auf seiner gegen die Führungsbahn laufenden Seite eine kontinuierliche, insbesondere gleichförmige, Folge von senkrecht oder abgewinkelt abstehenden und an einer Riemenbasis angebrachte Lamellen aufweist. Die Begriffe des Lamellenriemens bzw. der Lamellen umfassen im Rahmen der Erfindung auch Ausführungsformen mit lateral (quer zur Längserstreckung des Riemens) regelmäßig oder unregelmäßig angeordnete Noppen, beispielsweise in zylinderförmige Ausbildung. Die Lamellen können dabei entgegen der Förderrichtung oder in Förderrichtung abgewinkelt sein. Die Form der Lamellen ist grundsätzlich beliebig. Sie können beispielsweise als im Querschnitt (bezogen auf eine orthogonal zur Führungsbahn stehende und Richtung der Förderrichtung verlaufenden Ebene) als im wesentlichen dreiecksförmige, mittensymmetrische Lamellen ausgebildet sein, wobei die Lamellenspitzen abgerundet sind. Die Lamellen können in ihrer Erstreckung quer zur Förderrichtung orthogonal zur Förderrichtung (durchgehend) verlaufen oder hiergegen mit einem Anstellwinkel angestellt sein (im Falle der Noppen können Noppenreihen orthogonal oder mit Anstellwinkel eingerichtet sein). Letzteres ist insbesondere vorteilhaft zur Führung der Gegenstände entlang der Laufkante. Der Anstellwinkel, gemessen zwischen der Längserstreckung des Transportriemens und der Quererstreckung der Lamellen, und zwar auf der Seite in Laufrichtung des Transportriemens, kann kleiner als 90°, beispielsweise 80-89,5°, sein. Lamellen sind typischerweise gummielastisch oder federelastisch. Der Abstand A kann Null sein, i.e. die Lamellenspitzen berühren die Führungsbahn.Im Falle der Förderung von Münzen empfiehlt sich ein Abstand A im Bereich von 0 bis 2 mm, vorzugsweise von 0 bis 1 mm, insbesondere von 0 bis 0,5 mm oder 0 bis 0,1 mm. Bezüglich der Ausbildung im Detail geeigneter Lamellen wird ergänzend ausdrücklich auf die Literaturstelle DE 199 57 482 A1 verwiesen. Gleiches gilt für die antriebseitige Ausführung des Lamellenriemens als Keilriemen, Flachriemen oder Zahnriemen sowie die Einbringung eventueller Bewehrungselemente.

Mit der Erfindung wird erreicht, daß Münzen insbesondere in dem Einlaufbereich zuverlässig an der Laufkante der Führungsbahn laufen und folglich beispielsweise eine Detektion des Münzendurchmessers mit verbesserter Zuverlässigkeit erfolgt. Fehlmessungen und folglich Fehlsortierungen werden dadurch praktisch ausgeschlossen.

Die Erfindung ist grundsätzlich bei beliebiger Führung des Lamellenriemens auf dem Transportarm einsetzbar. So können beispielsweise Führungselemente für den Lamellenriemen eingerichtet sein, welche im Querschnitt zur Längserstrekkung des Transportarmes U- oder H-förmig sind, wobei der Lamellenriemen beidseitig seitlich, bezogen auf den Lamellenriemen, durch Stege geführt wird. Dabei gleitet der Lamellenriemen auf einer Stützfläche zwischen den Stegen. Ebenso ist es möglich, eine Mehrzahl von klassischen Führungsrollen entlang des Transportarmes einzurichten. Diese können dann, in bekannter Weise, federelastisch mit einer Kraftkomponente zur Führungsbahn hin gelagert und aufgehängt sein. Auch endseitig des Transportarmes angebrachte Umlenkrollen sind insofern Führungsrollen im Sinne dieser Beschreibung.

Im einfachsten Fall können die Mittel zur Stützung eine an der Führungsbahn angebrachte Führungskante sein, wobei die Höhe der Führungskante größer als der Abstand A ist. Die Führungskante befindet sich dann selbstverständlich auf der der Laufkante sowie dem Anlaufelement der Führungsbahn gegenüberliegenden Seite der Führungsbahn. Erreicht wird somit eine Abstützung der Lamellenspitzen gegen orthogonal zur Förderrichtung stehende und von der Führungskante wegweisende Kraftkomponenten.

Alternativ oder zusätzlich können die Mittel zur Stützung eine Bordscheibe einer Führungsrolle umfassen, wobei der Radius R der Bordscheibe zumindest den Abstand S1 zwischen einer Lamellenbasis und der Drehachse der Bordscheibe beträgt. Es können auch mehrere Bordscheiben an einer Mehrzahl von Führungsrollen vorgesehen sein. Eine Führungsrolle kann beidseitig Bordscheiben aufweisen. Wesentlich ist, daß jedenfalls auf der der Laufkante gegenüberliegenden Seite einer Führungsrolle eine solche Bordscheibe eingerichtet ist. Eine Bordscheibe kann bis an die Führungsbahn heran und sogar seitlich an dieser vorbei sich erstrecken. Bevorzugt ist es allerdings, wenn der Radius R der Bordscheibe kleiner als der Abstand S2 zwischen der Führungsbahn und der Drehachse der Bordscheibe ist.

Grundsätzlich kann die Bordscheibe drehfest sein. Bevorzugt ist es jedoch, wenn die Bordscheibe mit der Führungsrolle verbunden ist und mit dieser rotiert. In diesem Fall wird ein vorteilhafter Zusatzeffekt geschaffen. Denn die Außenumfangsgeschwindigkeit der Bordscheibe ist dann größer als die (mittlere) Lineargeschwindigkeit der Lamellenspitzen mit der Folge, daß die Seite der Lamellenspitzen, welche durch die Bordscheibe gestützt wird, in Förderrichtung verbogen wird. Dadurch wird letztendlich auf die geförderten Münzen sogar eine Kraftkomponente in Richtung zur Laufkante erzeugt.

Insbesondere im Einlaufbereich können eine Mehrzahl benachbarter Führungsrollen jeweils mit einer Bordscheibe ausgestattet sein. Aufgrund der hohen Ansprüche an eine zuverlässige Führung werden Führungsrollen im Einlaufbereich (und somit im Detektorbereich) mit relativ geringem Achsabstand zueinander eingerichtet sein. Grundsätzlich ist dann der minimal einrichtbare Achsenabstand durch den Durchmesser einer Bordscheibe bestimmt. Es kann aber wünschenswert sein, den Achsenabstand der Führungsrollen noch kleiner als den Durchmesser einer Bordscheibe zu gestalten. Eine bevorzugte Ausführungsform ist daher dadurch gekennzeichnet, daß die Summe der Außenradien R zweier benachbarter Bordscheiben größer als der Abstand der Drehachsen der Bordscheiben ist, wobei die Bordscheiben mit gleicher Winkelgeschwindigkeit rotieren und wobei die Bordscheiben miteinander kämmende Außenzähne aufweisen. Die Außenzähne gewährleisten eine zuverlässige Stützung der Lamellenspitzen und ermöglichen gleichzeitig aufgrund ihres kämmenden Eingriffs eine besonders enge Anordnung der Drehachsen der Bordscheiben.

Weiterhin lehrt die Erfindung die Verwendung einer Vorrichtung des vorstehenden Aufbaues zur Förderung von Münzen in horizontaler und/oder vertikaler und/oder schräger Richtung, gegebenenfalls mit bogensegmentförmigen, insbesondere kreissegmentförmigen, Übergangsbereichen sowie die Verwendung in einer solchen Vorrichtung zum Zählen und/oder Sortieren von Münzen.

Schließlich lehrt die Erfindung ein Verfahren zum Fördern von Gegenständen, wobei die Gegenstände in dem Einlaufbereich einer Vorrichtung zum Fördern des vorstehenden Aufbaues um ein Anlaufelement entlang einer Bogensegmentbahn in die Führungsbahn einlaufen, wobei die Außenumfangsgeschwindigkeit der, bezogen auf die Führungsbahn, gegenüber dem Anlaufelement angeordneten Bordscheibe größer als die mittlere Lineargeschwindigkeit der Lamellenspitzen ist, und wobei die Gegenstände durch die Lamellenspitzen mit einer Kraftkomponente orthogonal zur Förderrichtung und zu einer der Bordscheibe gegenüberliegenden Laufkante der Führungsbahn hin gerichtet beaufschlagt werden.

Im Folgenden wird die Erfindung anhand von lediglich Ausführungsbeispielen darstellenden Figuren näher erläutert.
Es zeigen:
- Fig. 1:: Eine schematische Darstellung eines im Rahmen der Erfindung eingesetzten Lamellenriemens sowie dessen Funktion,
- Fig. 2:: eine schematische Darstellung der kinematischen Zusammenhänge bei dem Übertritt einer Münze von einem Drehteller auf eine Führungsbahn,
- Fig. 3:: eine Seitenansicht einer Ausführungsform mit Bordscheiben,
- Fig. 4:: eine schematische Aufsicht auf den Gegenstand der Figur 3,
- Fig. 5:: eine Aufsicht einer Ausführungsform mit einer Führungskante

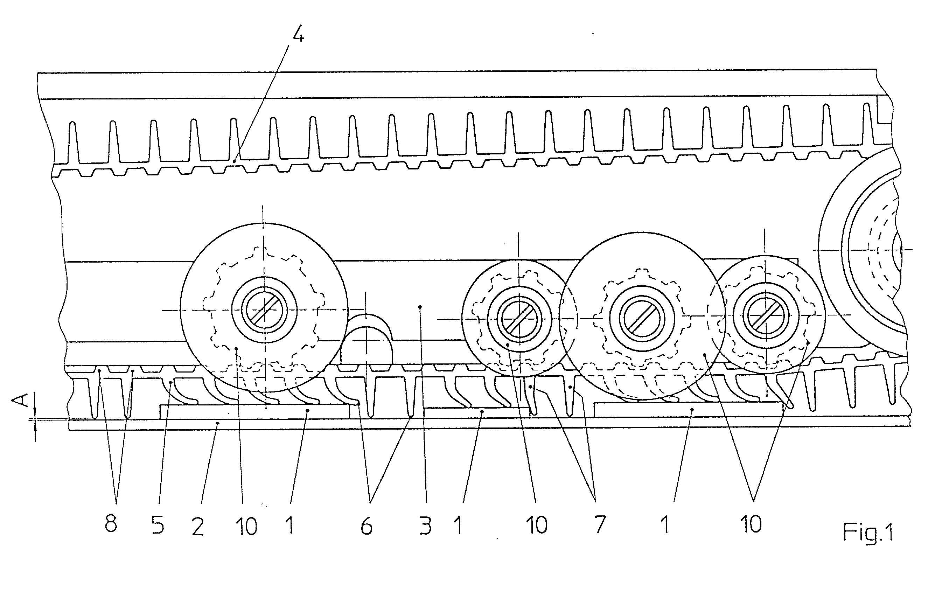

In der Figur 1 erkennt man vereinzelte Münzen 1, welche auf einer Führungsbahn 2 geführt werden. Auf einem Transportarm 3 läuft ein Lamellenriemen 4 um. Das der Führungsbahn 2 zugewandte Trum 5 des Lamellenriemens 4 ist mittels der Führungsrollen 10 mit der Maßgabe geführt, daß zu der Führungsbahn 2 hin weisende Lamellenspitzen 6 des Lamellenriemens 4 einen Abstand A zu der Führungsbahn 2 aufweisen, welcher kleiner als die geringste Höhe eines Gegenstandes 1 über der Führungsbahn 2 ist. In der Darstellung der Figur 1 werden die Gegenstände bzw. Münzen von rechts nach links gefördert. Als Mittel zur Stützung sind zwei durchmessergrößere Bordscheiben 9 erkennbar.

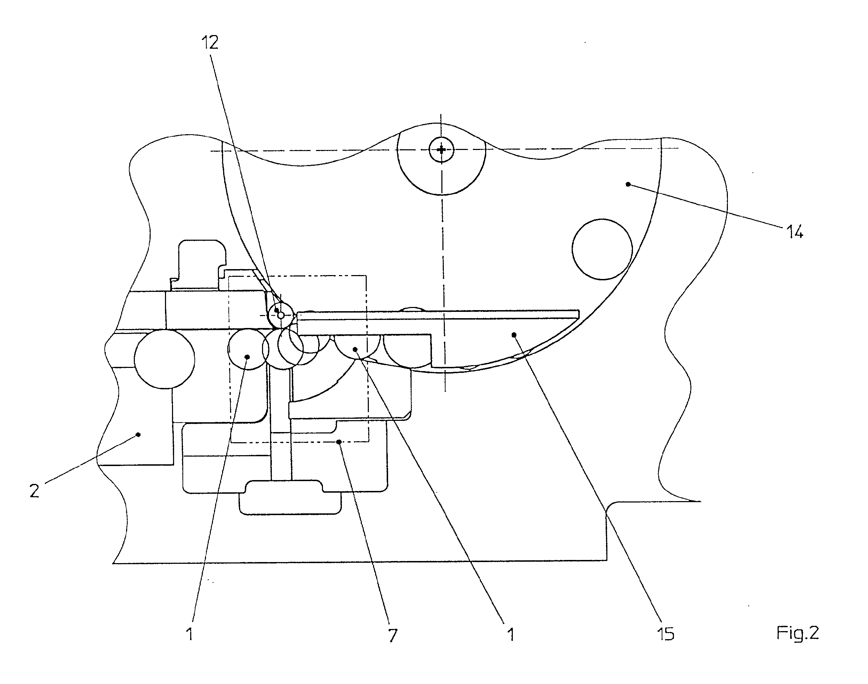

In der Figur 2 ist die Kinematik einer einzelnen Münze 1 beim Übergang von einem Drehteller 14 auf eine Führungsbahn 2 dargestellt. Man erkennt, daß die Münze 1 auf dem Drehteller mittels eines ortsfesten Vereinzelungselementes 15 vereinzelt ist. Zum Zwecke der Vereinzelung können auch weitere Vereinzelungselemente als Höhenbegrenzung vorgesehen sein. Im Bereich nach dem Vereinzelungselement 15 trifft die auf dem Drehteller 14 umlaufende Münze 1 zunächst auf ein Anlaufelement 12, welches als Kante oder Rolle ausgeführt sein kann. Man erkennt in der Figur 2, daß die Münze dann zunächst einem Kreisbogensegment entlang um das Anlaufelement 12 läuft und erst mit dem Eintritt auf die Führungsbahn 2 im wesentlichen linear transportiert wird. Der Übersichtlichkeit halber ist der Transportarm 3 mit dem Lamellenriemen 4 nicht dargestellt. Dessen Einlaufbereich 7 erstreckt sich bis an den Drehteller 14 heran.

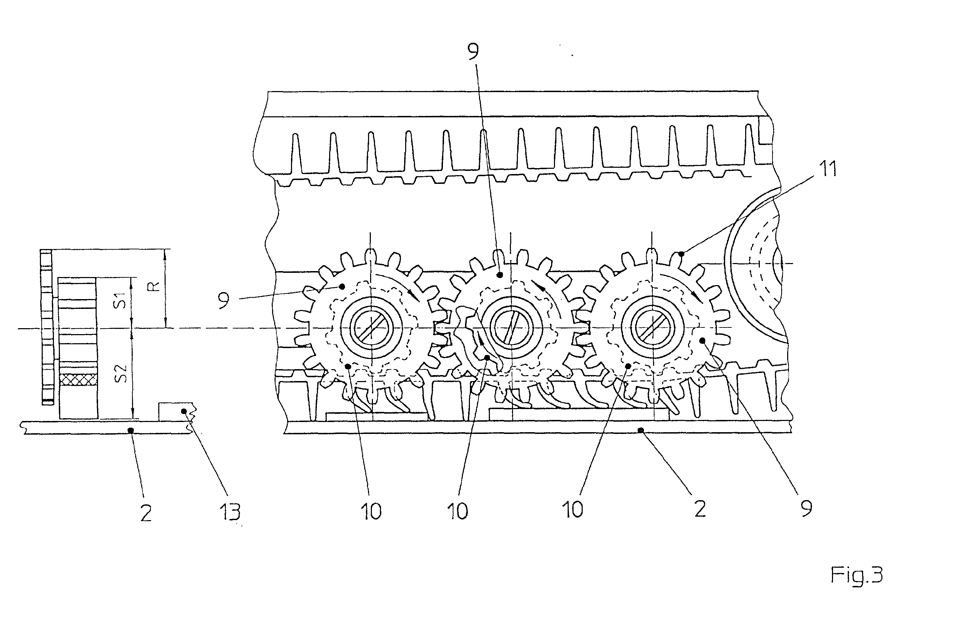

In der Figur 3 ist eine Ausführungsform der Erfindung mit miteinander kämmenden und gezahnten Bordscheiben 9 an benachbarten Führungsrollen 10 dargestellt. Die Bordscheiben 9 sind auf der der Laufkante 13 gegenüberliegenden Seite, bezogen auf die Führungsbahn 2, der Führungsrollen 10 angebracht. Man erkennt, daß die Summe der Außenradien R zweier benachbarter Bordscheiben 9 größer als der Abstand der Drehachsen der Bordscheibe 9 ist. Zumindest eine Bordscheibe 9 rotiert aufgrund fester Verbindung mit ihrer Führungsrollen 10 mit gleicher Winkelgeschwindigkeit wobei die Bordscheiben 9 Außenzähne 11 aufweisen, die miteinander kämmen. Der Radius R der Bordscheibe 9 ist größer als der Abstand S1 zwischen einer Lamellenbasis und der Drehachse einer Bordscheibe 9. Der Radius R der Bordscheibe 9 ist weiterhin kleiner als der Abstand S2 zwischen der Führungsbahn 2 und der Drehachse der Bordscheibe 9.

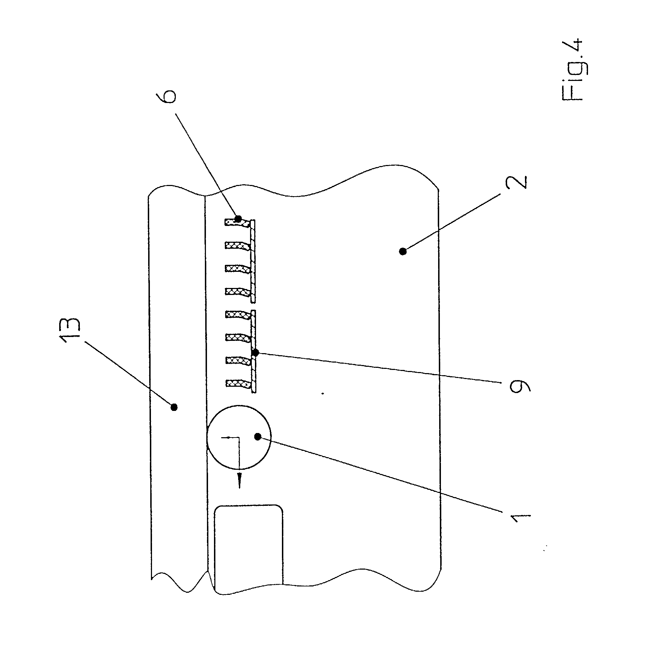

In der Figur 4 ist die Wirkungsweise der Ausführungsform der Figur 1 schematisch erläutert. Da die Außenumfangsgeschwindigkeit der Bordscheibe 9 größer als die mittlere Lineargeschwindigkeit der Lamellenspitzen 6 ist wird die durch die Bordscheibe 9 gestützte Seite der Lamellenspitzen 6 in Richtung der Förderrichtung vorgebogen. Dies führt letztendlich dazu, daß die Münze 1 durch die Lamellenspitzen 6 mit einer Kraftkomponente orthogonal zur Förderrichtung und zu der der Bordscheibe 9 gegenüberliegende Laufkante 13 der Führungsbahn 2 hingerichtet beaufschlagt werden. Dies ist schematisch durch die Kraftpfeile dargestellt.

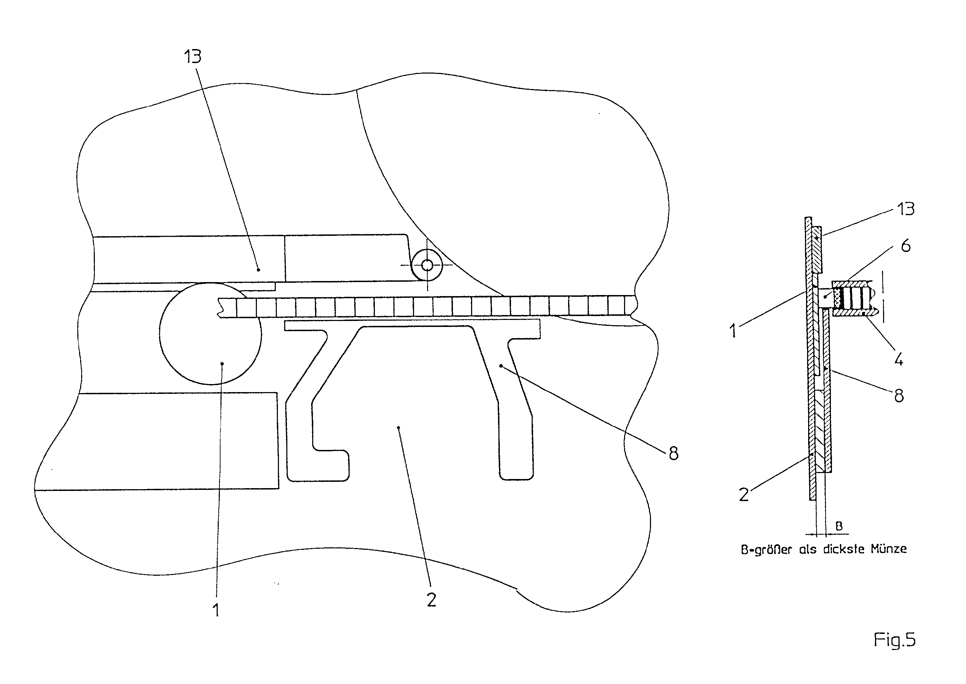

In der Figur 5 ist eine Ausführungsform der Erfindung dargestellt, in welcher die Mittel 8 zur Stützung eine an der Führungsbahn 2 angebrachte (ortsfeste) Führungskante 8 sind, wobei die Höhe der Führungskante 8 über der Führungsbahn 2 größer als A ist. Mit dieser Ausführungsform wird durch Einsatz sehr einfacher Mittel ein unerwünschtes Verkippen des Lamellenriemens zuverlässig vermieden. Die Führungskante 8 kann führungsbahnseitig eine Ausnehmung aufweisen, deren Höhe B über der Führungsbahn 2 größer als die dickste zu fördernde Münze ist.

## Patentansprüche

1. Vorrichtung zum Fördern von vereinzelten Gegenständen (1), insbesondere von scheibenförmigen Gegenständen, wie Münzen,
mit einer Führungsbahn (2) und
mit einem auf einem Transportarm (3) umlaufenden Lamellenriemen (4), wobei ein der Führungsbahn (2) zugewandtes Trum (5) des Lamellenriemens (4) über die gesamte Längserstreckung des Transportarmes (3) mit der Maßgabe geführt wird, daß zu der Führungsbahn (2) hinweisende Lamellenspitzen (6) des Lamellenriemens (4) einen Abstand (A) zu der Führungsbahn (2) aufweisen, welcher kleiner als die geringste Höhe eines Gegenstandes (1) über der Führungsbahn (2) ist,
**dadurch gekennzeichnet,**
**daß** zumindest in einem Einlaufbereich (7) des Transportarmes (3) Mittel (8) zur Stützung der Lamellenspitzen (6) in Richtung orthogonal zur Transportrichtung eingerichtet sind.

2. Vorrichtung nach Anspruch 1, **dadurch gekennzeichnet, daß** die Mittel (8) zur Stützung eine an der Führungsbahn (2) angebrachte Führungskante (8) sind, wobei die Höhe der Führungskante größer als (A) ist.

3. Vorrichtung nach Anspruch 1, **dadurch gekennzeichnet, daß** die Mittel (8) zur Stützung eine Bordscheibe (9) einer Führungsrolle (10) sind, wobei der Radius (R) der Bordscheibe (9) zumindest den Abstand (S1) zwischen einer Lamellenbasis und der Drehachse der Bordscheibe (9) beträgt.

4. Vorrichtung nach Anspruch 3, **dadurch gekennzeichnet, daß** der Radius (R) der Bordscheibe (9) kleiner als der Abstand (S2) zwischen der Führungsbahn (2) und der Drehachse der Bordscheibe (9) ist.

5. Vorrichtung nach Anspruch 3 oder 4, **dadurch gekennzeichnet, daß** die Bordscheibe (9) mit der Führungsrolle (10) verbunden ist und mit dieser rotiert.

6. Vorrichtung nach einem der Ansprüche 3 bis 5, **dadurch gekennzeichnet, daß** eine Mehrzahl benachbarter Führungsrollen (10) jeweils mit einer Bordscheibe (9) ausgestattet sind.

7. Vorrichtung nach Anspruch 6, **dadurch gekennzeichnet, daß** die Summe der Außenradien (R) zweier benachbarter Bordscheiben (9) größer als der Abstand der Drehachsen der Bordscheibe (9) ist, wobei die Bordscheiben (9) mit gleicher Winkelgeschwindigkeit rotieren und wobei die Bordscheiben (9) miteinander kämmende Außenzähne (11) aufweisen.

8. Verwendung einer Vorrichtung nach einem der Ansprüche 1 bis 7 zur Förderung von Münzen (1) in horizontaler und/oder vertikaler und/oder schräger Richtung, gegebenenfalls mit bogensegmentförmigen, insbesondere kreissegmentförmigen Übergangsbereichen.

9. Verwendung einer Vorrichtung nach einem der Ansprüche 1 bis 7 in einer Vorrichtung zum Zählen und/oder Sortieren von Münzen (1).

10. Verfahren zum Fördern von Gegenständen (1), wobei die Gegenstände (1) in dem Einlaufbereich (7) einer Vorrichtung zum Fördern nach einem der Ansprüche 5 bis 7 um ein Anlaufelement (12) entlang einer Bogensegmentbahn in die Führungsbahn (2) einlaufen, wobei die Außenumfangsgeschwindigkeit der, bezogen auf die Führungsbahn (2), gegenüber dem Anlaufelement (12) angeordneten Bordscheibe (9) größer als die mittlere Lineargeschwindigkeit der Lamellenspitzen (6) ist, und wobei die Gegenstände (1) durch die Lamellenspitzen (6) mit einer Kraftkomponente orthogonal zur Förderrichtung und zu einer der Bordscheibe (9) gegenüberliegenden Lauf kante (13) der Führungsbahn (2) hin beaufschlagt werden.
